# EUROPEAN PATENT APPLICATION

(11) **EP 2 119 340 A2**
(43) Date of publication of application: **18.11.2009**
(21) Application number: 09386013.8
(22) Date of filing: 12.05.2009
(51) Int. Cl.: A01D 46/26

(54) **Olive harvesting device**

(30) Priority: 13.05.2008 GR 20080100315
(71) Applicant: Georgoulis, Georgios, 22028 Loti Arcadia (GR)
(72) Inventor: Georgoulis, Georgios, 22028 Loti Arcadia (GR)

(57) **Abstract**

The invention constitutes a complete device for the harvesting of olive trees that can be mounted on the tractor and is capable of rotating to the left and right of it. It consists of a combination of rotating beating rods (18) that stand on girders (4,5) of adjustable length and on a vertical curved girder which are responsible for raising them. The machine includes a freely rotating collection net (11) in the shape of an umbrella that follows the movements of the beating rods. It cleans the fruit from leaves and small branches by means of a fan (26). All the operations of the machine are carried out by simple actions of the tractor driver in the manual control of the machine.

## Description

The invention constitutes a complete device for the harvesting of olive trees. The harvesting is carried out by hitting the fruit with rods/sticks, then cleaning it of leaves and small branches by means of a fan and storing it into sacks.

The methods of harvesting known to date are the following:
1. By means of manually operated mechanical rods that are particularly tiring for those operating them. Moreover, these do not represent a complete device for the harvesting of olives, for they merely hit the fruit without collecting them.
2. By means of mechanical harvesters that consist of plastic rods which move retrogressively and are relatively short. As a result, these devices only reach the fruit in the outer, peripheral parts of the trees. Their function is also limited in that they hit the fruit without actually collecting them. On account of their manufacturing, mechanical harvesters cannot be used in sloping terrain.
3. By means of machines that shake the branches or trunk of the tree causing the fruit to fall. They are ineffective because they only cause the ripe fruit to fall with the first application and many repetitions are required to achieve results. Additionally, the machines in question are recommended for a limited range of olive tree varieties, those with small branches and large fruit.
4. By means of rotating machines that are cumbersome due to the great bulk and length of their rods and because they are attached to larger parts. Their bulk makes them suitable only in the case of varieties of olive trees that are small in size and groves that are linear and sparsely planted. Another disadvantage of these machines is that, because of the jams that the branches cause in the different stages of the cleaning, the cleaning process becomes particularly time consuming.

The advantages of this invention are:
- It consists of a combination of several rotating rods attached to frames that are in turn attached to girders of adjustable length.

### 1. It can be mounted on the tractor.

- It can rotate to the right and left of the tractor.
- It serves the harvesting of olive trees irrespective of their size thanks to the implementation of a vertical curved girder.
- It can effectively harvest olive groves of an irregular planting structure.
- It uses olive nets in the shape of an umbrella that can rotate freely and thus follow the movement of the rods.
- The application of the fan performs the cleaning of the fruit from leaves and small branches without the obstruction of jams.

The device consists of a combination of numerous rotating short rods attached to frames that are in turn fastened onto girders of adjustable length and height. During their introduction and withdrawal from the olive tree the rods hit the fruit that fall on the collection nets. The device extends the latter underneath the tree during this process. Subsequently, a worker transports the fruit to a sack, while the fan carries out the cleaning of the fruit from leaves and small branches.

The advantage of this invention is that the device can be mounted on the tractor and, therefore, it can be relatively stable even when used in sloping terrain. The ability of the machine to rotate to the right or left side of the tractor and the slenderness of the rods lend flexibility to the movements of the tractor in the field. The frames carrying the rods stand on horizontal girders that are in turn attached to a vertical curved semi-rotary girder. This structure provides an easy and fast means of collecting the fruit irrespective of the size of the olive trees and it makes the collection possible to the right, left and even to the back of the tractor.

The implementation of freely rotating nets in the shape of an umbrella that are supported by a beam which permits them to follow the device of the rods as it moves, minimizes the loss of fruit that fall out of the nets. Moreover, it achieves this by employing a minimal net surface. On the other hand, the beam supporting the umbrella shaped net can be fixed in a stable position, thus, making possible the harvesting of olives groves that are densely planted or have an irregular planting structure. The adjustable length of the girders on which the beating rods stand enables us to harvest even large olive trees. Finally, the small fan effectively cleans the fruit from branches and leaves, overcoming the hindrance of jams and the delays that they cause.

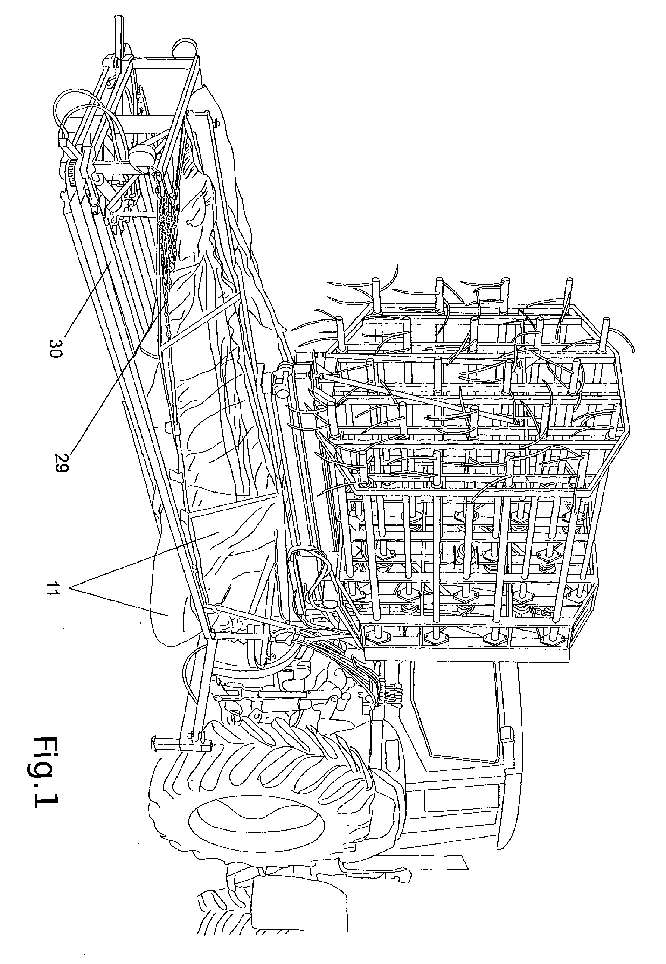

Figure 1 offers a foreshortened perspective of the invention. The machine is depicted in one of the many positions that it can assume during its use. This figure also illustrates the en route position of the machine.

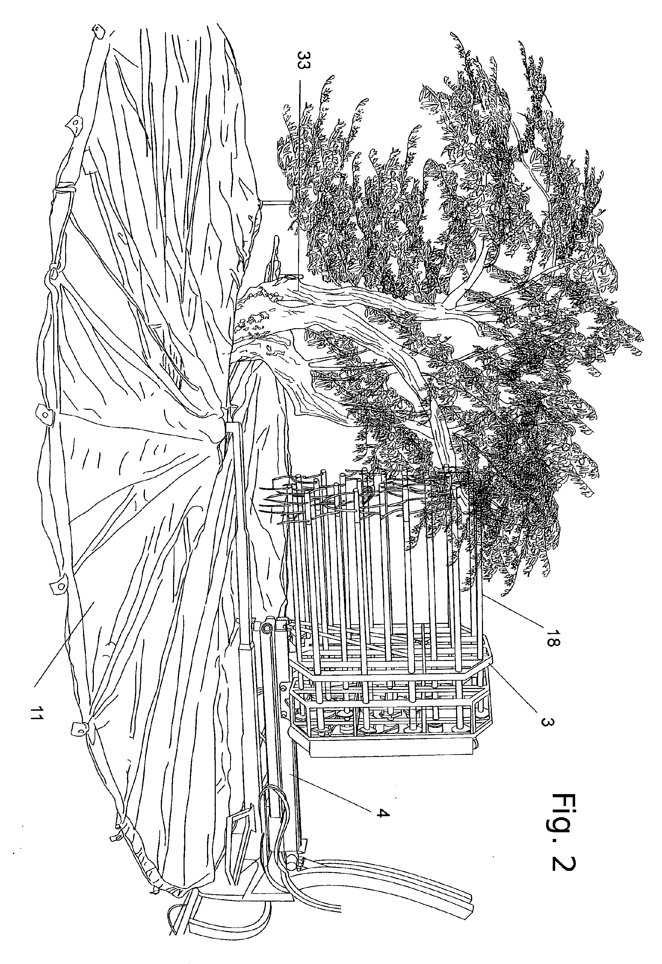

Figure 2 presents a perspective of the machine during its use; with the collection net opened under the tree and the rods just being introduced into it.

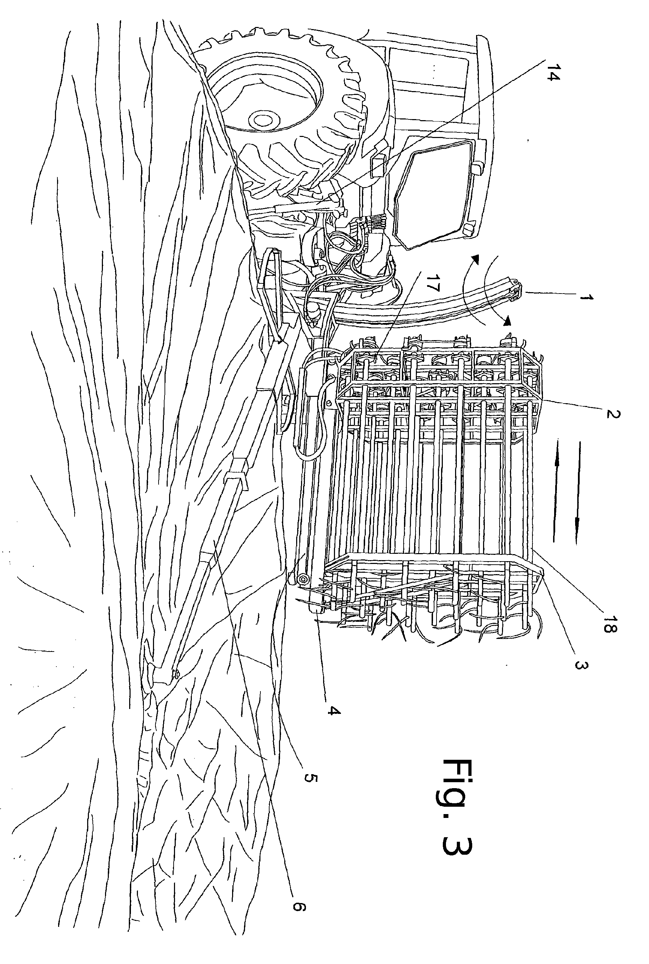

Figure 3 shows the machine with the system of rods rotating freely to the right and left of the tractor, while the collection net is open on the ground and remains fixed.

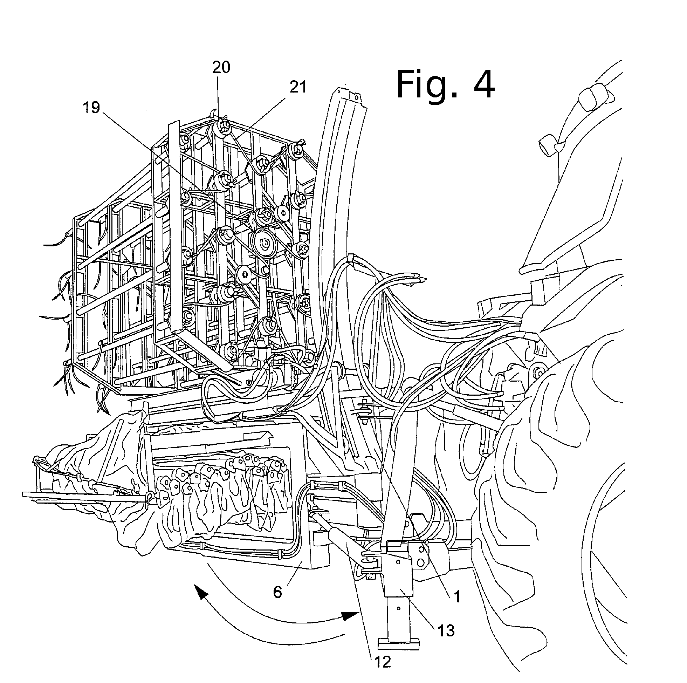

Figure 4 represents the machine moving towards the left side of the tractor with the collection net closed.

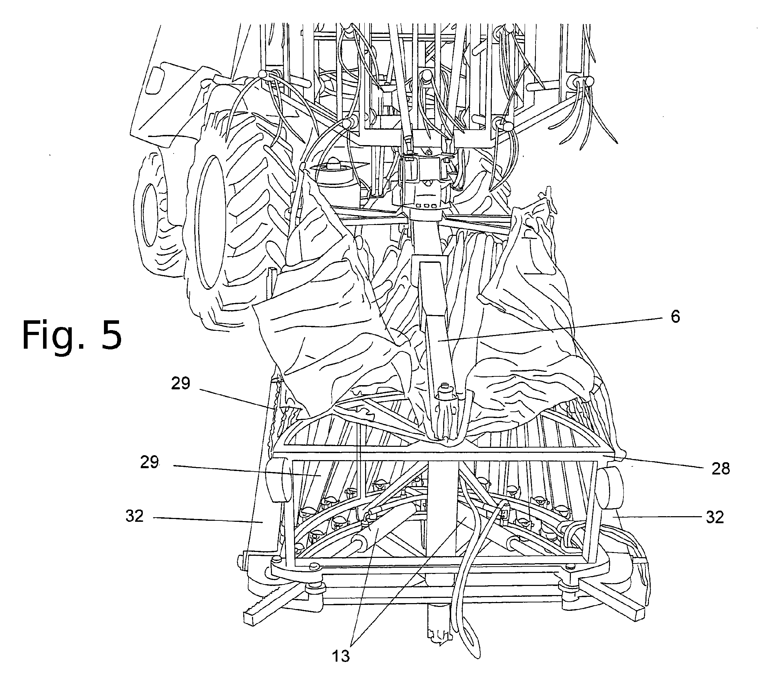

Figure 5 is a perspective of the machine from the back of the tractor.

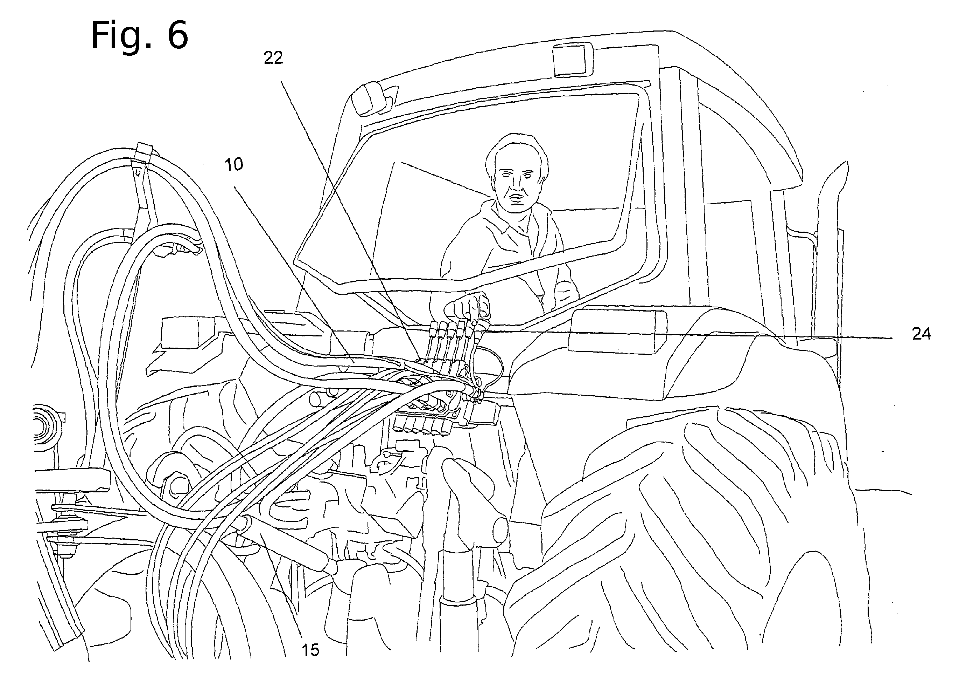

Figure 6 depicts the driver of the tractor as he operates the hydraulic control of the machine.

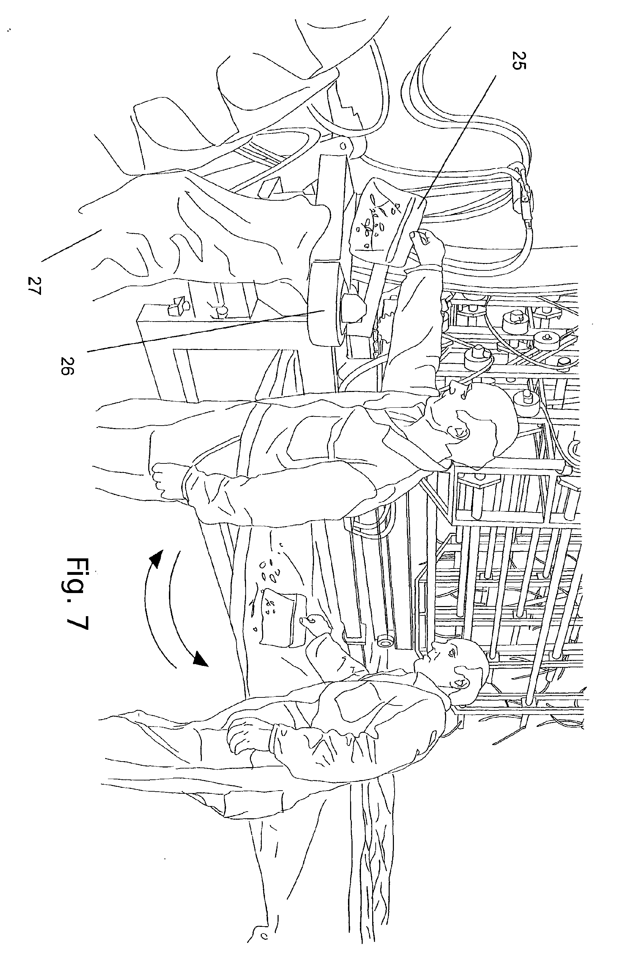

Figure 7 shows the worker as he carries the fruit from the collection net to the fan. There, the fruit are cleaned from leaves and small branches and stored in sacks.

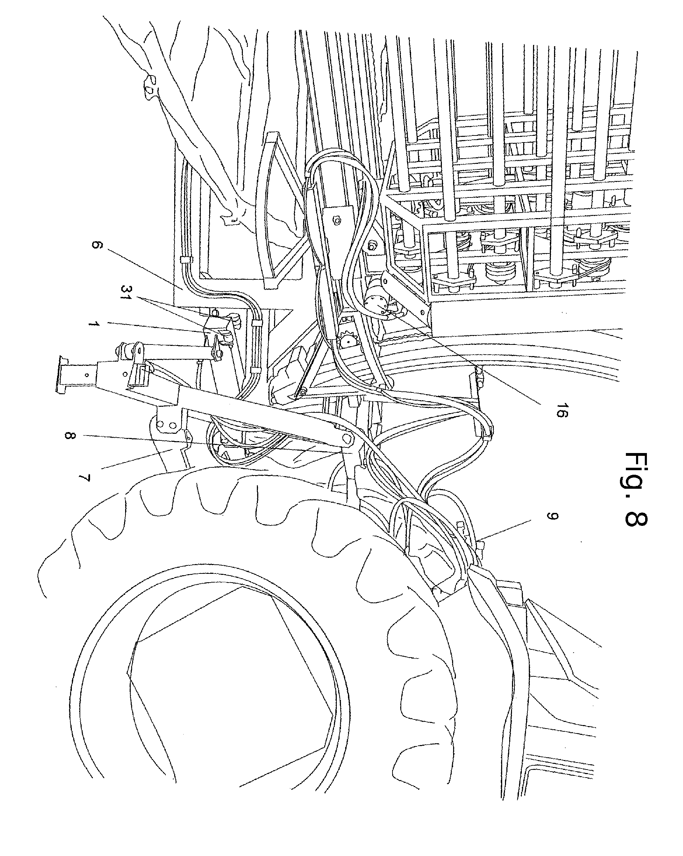

Figure 8 represents a detail of the machine that demonstrates how the beam supporting the collection net can remain fixed while the system of beating rods rotates.

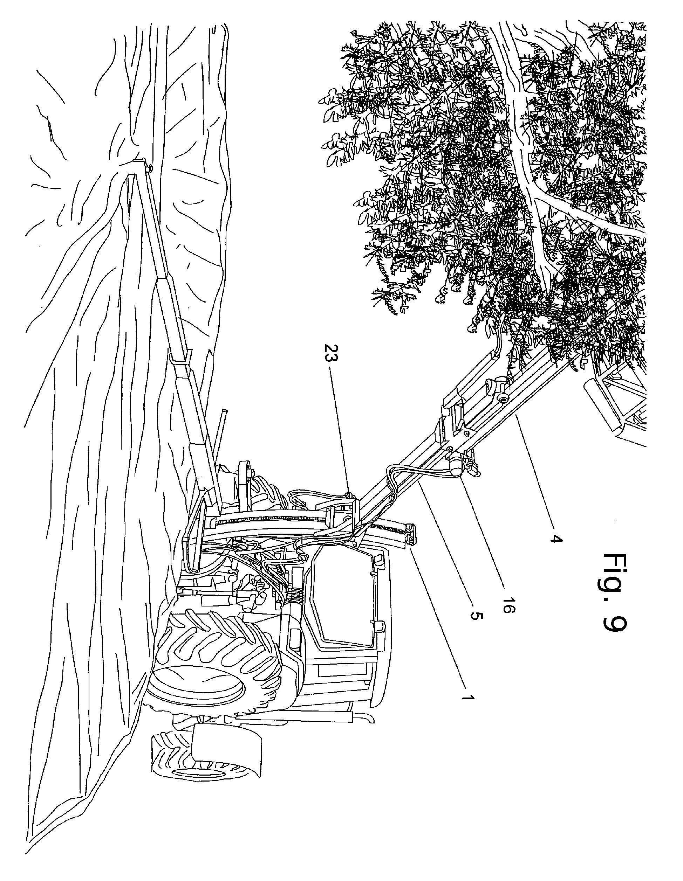

Figure 9 pictures the machine with the collection net opened, the horizontal adjustable girders raised and the beating rods being introduced into the higher part of the olive tree.

A way of applying the invention is described below with reference to the diagrams. In order to start the machine we connect the front of it to the two lower arms of the tractor (7, diagram 8) and to the radar (8, diagram 8). We use the connectors of the tractor's hydraulic system to provide hydraulic pressure to the hydraulic system of the device. The wire shown in figure 10, diagram 6, connects the electric network of the tractor with that of the machine. We place the hydraulic control (22, diagram 6) where it can be operated by the driver and raise the machine with the lower arms of the tractor. We maintain the collection net closed (11, diagram 1) to minimize the machine's bulk and convey it easily to the field. When we adjust the opening of the hydraulic piston (12, diagram 4) the girder carrying the frame (28, diagram 5) rotates (6, diagram 4). The frame with the chains (29, diagram 1), the tubes (30, diagram 1) and the girders (32, diagram 5) carries the collection net and directs it to the olive tree. Subsequently, by adjusting the opening of the hydraulic pistons (13, diagram 5) the girders rotate (32, diagram 5) 180 degrees causing the collection net to spread in the form of a circular umbrella around the tree. Adjustment of the hydraulic piston (14, diagram 3) alters the inclination of the collection net to the right and left. We use the hydraulic piston (15, diagram 6) to amend the height at which the collection net stands above the ground. We then set in motion the hydraulic motor (16, diagram 8) that transports the horizontal girder (4, diagram 3) and the frame (2, diagram 3) closer to the branches of the olive tree. We put in motion the hydraulic motor (17, diagram 3) to move the frame (2, diagram 3) towards the frame (3, diagram 3). In this way the beating rods (18, diagram 2) are introduced into the tree and as they rotate, on account of the hydraulic motor (19, diagram 4), the pulleys (20, diagram 4) and the straps (21, diagram 4), they tap the fruit off the olive tree. The opposite action in the hydraulic control achieves the exit of the beating rods from the tree and we can then decide in which part of the tree we would like to introduce them next. Moreover, it is possible to rotate the rods to the left or right even while they remain in the same position (that is, while they do not enter into or exit from the branches of the olive tree). We can achieve this by selecting the position of the electric switch in the hydraulic control (24, diagram 6). The motion of the hydraulic motor (23, diagram 9) raises the girders (5, diagram 3, diagram 9) (4, diagram 3, diagram 9) that carry the frames on which the beating rods are fastened enabling us to harvest the fruit above or below the area of the tree that we have already harvested. We can raise the girders gradually due to the curved shape of the vertical girder (1, diagram 3). To control how far we introduce the rods into the branches of the olive tree we adjust the frame (4, diagram 3) that can move on the girder (4, diagram 3). We vary the length of the hydraulic piston (12, diagram 4) to change the direction of the entire machine to the left or right of the tractor and the girder (13, diagram 4) and harvest to the left or right. The free rotation of the frame (28, diagram 5) in relation to the girder (6, diagram 5) enables us to control the direction of the umbrella shaped collection net and have it follow the movement of the rods without being obstructed by the trunk of the tree (33, diagram 2). In the event of there being an obstacle near the olive tree that we are harvesting, as is often the case in irregularly planted-grooves, we can fix the beam carrying the collection net on the ground (6, diagram 4), making possible in this way the free rotation of the girder (1, diagrams 8 and 3) that carries the beating rods. This can be accomplished by varying the length of the piston (15, diagram 6) that distances downwards the girder (6, diagram 8) and the rollers (31, diagram 8) which hold the girder (6, diagram 8). As a result, the girder (6, diagram 8) is freed and fixed to the ground because of the rotation, while the girder (1, diagram 8) can still rotate. In the next stage a worker collects the fruit that has accumulated on the collection net with a scoop (25, diagram 7) and transports it to the fan (26, diagram 7). While the fruit is directed into a sack, the fan removes the leaves and small branches (27, diagram 7).

## Claims

1. Olive harvester. The harvester can be mounted on the tractor and can move to the right or left of it. It consists of a combination of beating rods (18, diagram 2) that are fastened on girders of adjustable length (4, 5, diagram 9) and on a vertical curved girder (1, diagram 3) responsible for raising the rods. The harvester also includes a freely rotating support system for the collection net that is set in a frame (28, diagram 5) in the shape of an umbrella (11, diagram 2). This system has the ability to follow the movement of the beating rods. Finally, the machine comprises a fan (26, diagram 7) that separates the fruit from leaves and small branches. All the above systems are hydraulic.

2. Olive harvester, in accordance with claim 1, whose rotation is characteristically achieved by means of the hydraulic piston (12, diagram 4). Varying the length of the piston alters the inclination of the girder (13, diagram 4) in relation to girder (1, diagram 4). The latter carries the girders (4, 5, diagram 3) on which the frames (2, 3, diagram 3) are fastened with the rods attached to them (18, diagram 3). The hydraulic piston is also responsible for the rotation of the girder (6, diagram 4) that carries the frame (28, diagram 5) with the collection net attached to it.

3. Olive harvester, in accordance with claims 1 and 2, which comprises a vertical curved girder (1, diagram 3). The latter holds the girders (4, 5 diagram 3) that carry the frames (2, 3, diagram 3) with the rods fastened to them (18, diagram 3). When the hydraulic motor (16, diagram 9) is set in motion the girder (4, diagram 9) moves towards the girder (1, diagram 9) bringing the rods (18, diagram 3) closer or distancing them from the tree.

4. Olive harvester, in accordance with claims 1, 2 and 3 that includes a girder (6, diagram 5) with a freely rotating frame attached to it (28, diagram 5). The frame carries chains (29, diagram 5), tubes (30, diagram 1) and beams/girders (32, diagram 5) on which the net for the collection of the olive fruit is fastened. The frame (28, diagram 5) carries hydraulic pistons whose length when reduced causes the girders (32, diagram 5) to rotate 180 degrees lending to the collection net the shape of a circular umbrella. The freely rotating frame (28, diagram 5) permits the umbrella shaped collection net to follow the rotating moves of the girder (1, diagram 9) to the right and left without being hindered by the trunk of the olive tree (33, diagram 2).

5. Olive harvester, in accordance with claims 1, 2, 3 and 4 that includes a fan (26, diagram 7) for separating the fruit from the leaves and small branches.

6. Olive harvester, in accordance with claims 1 and 2, that consists of the girder (1, diagram 3) that carries the beating rods and can rotate, while the girder (6, diagram 3) carrying the frame (28, diagram 5), on which the collection net is attached, remains fixed to the ground.
